Europäisches Patentamt

European Patent Office

Office européen des brevets

(19)

(11) Publication number : **0 657 889 A1**

(12) # EUROPEAN PATENT APPLICATION

(21) Application number : **94308776.7**

(22) Date of filing : **28.11.94**

(51) Int. Cl.[6] : **G11B 33/14, G11B 25/04**

(30) Priority : **09.12.93 US 165263**

(43) Date of publication of application :
**14.06.95 Bulletin 95/24**

(84) Designated Contracting States :
**DE GB**

(71) Applicant : **TEAC CORPORATION**
**3-7-3, Naka-cho**
**Musashino-shi Tokyo (JP)**

(71) Applicant : **Pont Peripherals Corporation**
**912 West Maude Avenue**
**Sunnyvale, California 94086 (US)**

(72) Inventor : **Kaczeus, Steven L.**
**1319 Chandon Court, San Jose,**
**California 95125 (US)**

(74) Representative : **Cross, Rupert Edward Blount**
**et al**
**BOULT, WADE & TENNANT**
**27 Furnival Street**
**London EC4A 1PQ (GB)**

(54) **Hard disk drive with reduced power consumption.**

(57) A rigid disk drive device includes a rotatable disk disposed in a housing, the diameter of said disk being such in relation to the dimension of the housing that rotation of the disk produces turbulent air flow rather than laminar air flow between the disk and the housing, thereby producing less resistance between the disk and the housing.

EP 0 657 889 A1

## BACKGROUND OF THE INVENTION

### Field of the Invention

This invention relates in general to hard disk drive systems and relates more particularly to such systems having reduced power consumption and air turbulence.

### Prior Art

Disk drive storage devices designed for battery operated personal computers such as laptops and notebooks are required to operate on 5 or 3.3 volts and to consume the minimum amount of battery power for long lasting operation without repeated recharging of the battery. Many of the applications for these devices involve use in airplanes or other environments where battery recharging is not available. Consequently, long lasting battery power life is a requirement.

This battery power life requirement is especially important on 3.5 inch and smaller form factor disk drive devices where the surface velocity of the rotating disk medium is relatively high. It has been customary in most small form factor hard disk drives to enclose the disk in a housing which is only slightly larger than the diameter of the disk itself, thereby reducing the packaging size and space requirements for the drive. For example, the 3.5 inch form factor hard disk drives employ a disk with a diameter of 95 millimeters and a separation of .040 inches between the disk periphery and the inner walls of the disk housing. However, this very close spacing between the disk periphery and the housing walls results in a high laminar shear air resistance between the outer edge of the disk and the stationary wall.

The resistance of air between a moving and a stationary object is determined by spacing and velocity parameters. For a constant velocity system, the only parameter that influences the degree of air resistance is the spacing between the stationary and moving elements. At small spacings, the air is sheared in a laminar manner and the shear resistance is relatively high. For larger spacings, the air moves into a turbulent mode and the air resistance is reduced; consequently, the power required to keep the moving element in motion is reduced. A general discussion of the airflow in rigid disk drives is contained in an article "Aerodynamic Aspects of Disk Files", IBM Journal of Research and Development, November 1974, pages 480-488.

Another requirement associated with power consumption in hard disk drives is to reduce the moment of inertia of the rotating disks for fast speed-up of the device at power-up cycle. One characteristic of battery operated systems is that for power saving purposes the disk drive devices are frequently and automatically turned off or put in "sleep mode" to preserve the life of the battery. Thus, the on-off duty cycles of these devices can be relatively high.

## SUMMARY OF THE INVENTION

The present invention provides a hard disk drive employing a larger than normal separation between the periphery of the disk and the walls of the disk housing to eliminate laminar air flow and replace it with turbulent air flow. Preferably, this increase in separation is accomplished by reducing the diameter of the disk, thereby permitting the continued use of conventional size disk housings.

## BRIEF DESCRIPTION OF THE DRAWINGS

Fig. 1 is a diagram showing the nature of the laminar air flow in a conventional 3.5 inch disk drive;

Fig. 2 is a diagram illustrating the turbulent air flow resulting from the present invention; and

Fig. 3 is a graph showing the energy savings in a disk drive embodying the present invention.

## DETAILED DESCRIPTION OF THE PRESENTLY PREFERRED EMBODIMENTS

Viscous flows are classified into either laminar or turbulent modes on the basis of internal flow structure. In the laminar mode, flow structure is characterized by motion in laminae or layers, while flow structure in the turbulent mode is characterized by random, three-dimensional motions of fluid particles superimposed on the mean motion.

Whether a flow is laminar or turbulent depends on the properties of the particular flow. In the case of flow through a pipe, the nature of the flow, laminar or turbulent is determined by the value of the dimensionless parameter, the Reynolds number, $Re = pVD/\mu$, where p is the density of the fluid, V the average flow velocity, D the pipe diameter, and $\mu$ the viscosity of the fluid. Experiments have shown that the Reynolds number is a key parameter for other flow cases as well. In general,

$$Re = \frac{pVL}{\mu} = \frac{VL}{v}$$

where L is a characteristic length descriptive of the flow field.

Although for values of Re greater than 2300, the flow is usually turbulent and for Re values less than 2300 the flow is laminar, there is no single value of the Reynolds number at which the flow changes from laminar to turbulent. However, there is a range of values of Re over which the flow will change from laminar to turbulent.

For a disk drive incorporating the present invention, the Reynolds equation may be written as follows:

$$Re = \frac{p\,V\,D}{\mu},$$

where

p = Density of air
V = Velocity of the disk at its outer diameter
D = Spacing between the stationary housing wall and the rotating disk edge
$\mu$ = Viscosity of air

Typical values are

p = 1.23 kg/m$^3$
$\mu$ = 1.78 x 10$^{-5}$ kg/msec

95 mm Disk Diameter Case

$$V = R \times \frac{\pi\,N}{30000}$$

Where

R = Disk Radius
N = Rotational Velocity

$$V = \frac{95}{2} \times \frac{\pi\,3600}{30000} = 17.90 \text{ m/sec}$$

D = 0.040 inch = 1.016 mm

The Reynolds number for such a 95 mm disk is

$$Re = \frac{1.23 \times 17.90 \times 1.016 \times 10^{-3}}{1.78 \times 10^{-5}} = 1256.7$$

This is well below the value of 2300 and is clearly laminar flow.

For a 90 mm disk diameter case in a standard 3.5 inch housing, the Reynolds number is

$$V = \frac{90}{2} \times \frac{\pi\,3600}{30000} = 16.96 \text{ m/sec}$$

D = 0.138 inch = 3.50 mm

$$Re = \frac{1.23 \times 16.96 \times 3.50 \times 10^{-3}}{1.78 \times 10^{-5}} = 4101.8$$

This is clearly turbulent flow.

An experiment was conducted with various gap dimensions in a 3.5 inch form factor disk drive where the size of gap between the outer edge of the spinning disk and the stationary housing was altered, while maintaining the angular velocity of the disks constant (3600 RPM).

Calculations indicate that by increasing the spacing between the outer edge of the disk and the stationary housing from 0.040 inches to 0.138 inches, the air flow would be changed from a laminar to a turbulent air flow region. To substantiate this, a disk drive with a disk diameter of standard 95 millimeters was employed and the start-up time and spindle motor power consumption were measured and compared with the comparable measurements for a 90 millimeter diameter disk. The results indicated a spin-up time decrease of 18 percent and power consumption reduction of 5 percent.

As discussed above, since the disk drive in a battery operated system is continuously being stopped when the drive is not operating, the start-stop duty cycle of a disk drive in such applications is high. The power saving feature of the present invention is a combination of power saving at start-up (18 percent) and the power saving at constant speed (5 percent).

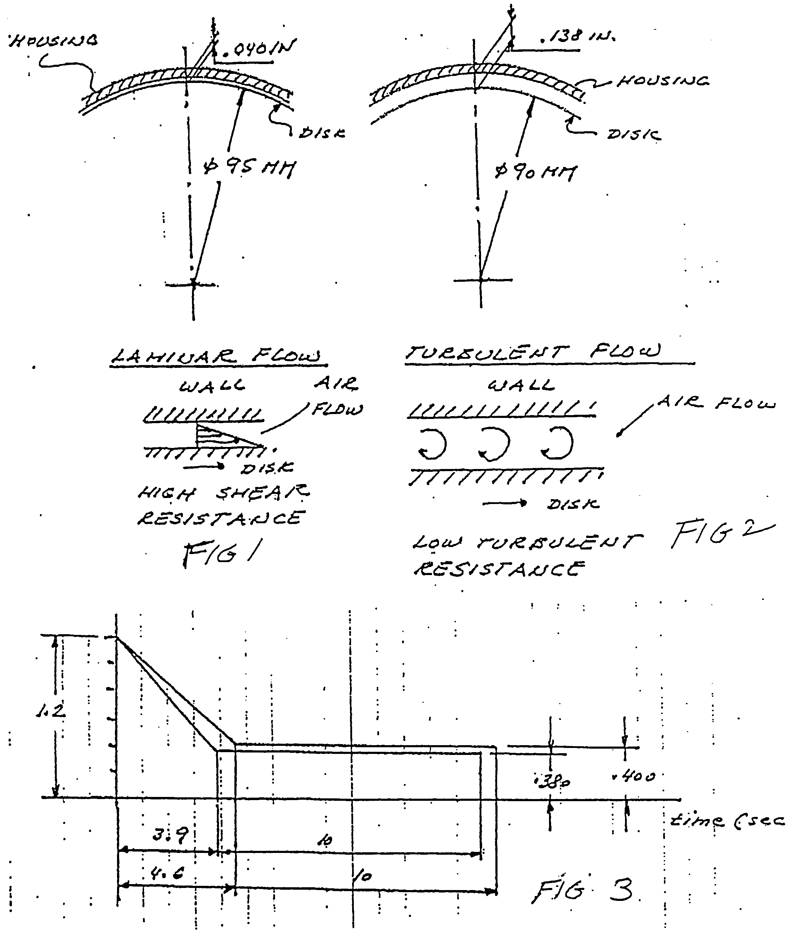

In order to maximize the power-saving feature of a battery operated personal computer, the disk drive is powered down when it is not used, similar to a floppy disk drive. Fig. 3 shows an example demonstrating the effective power-saving for a 90 mm diameter disk media in accordance with the present invention versus a 95 mm disk.

The energy used is the area under the curve in Fig. 3. The following calculations quantify these energy savings.

$$E_1 = 14.6x.400x5 + (1.2 - .4)x\frac{4.6}{2}x5 = 38.4(wsec)$$

$$E_2 = 13.9x.380x5 + (1.2 - .380)x\frac{3.9}{2}x5 = 34.405(wsec)$$

V = 5 VOLTS

Thus, the overall power consumption reduction can range from approximately 12 percent to 5 percent, depending on the duty cycle of the drive.

An added benefit of the power consumption reduction of the present invention is that the air flow around the head transducer is not agitated as violently as it is with a small separation between the disk periphery and the housing walls. Thus, the head will fly in a more stable condition, resulting in a more reliable disk drive operation during read and write operations.

## Claims

1. A rigid disk drive device including a rotatable disk disposed in a housing, the diameter of said disk being such in relation to the dimension of said housing that rotation of said disk produces turbulent air flow between said disk and said housing.

2. A disk drive device in accordance with Claim 1 in which the diameter of said disk is 90 millimeters and the inside radius dimensions of said housing measured from the axis of said disk are 48.5 mm.

3. A disk drive device in accordance with Claim 2 in which the outer edge of said disk is spaced from the inner wall of said housing by at least 0.1 inches.

4. A disk drive in accordance with Claim 1 in which the air flow between said disk and said housing has a Reynolds number in excess of 2300.

5. A disk drive in accordance with Claim 1 in which the air flow between said disk and said housing has a Reynolds number in excess of 3000.

HOUSING

.040 IN

DISK

φ 95 MM

.138 IN.

HOUSING

DISK

φ 90 MM

LAMINAR FLOW

WALL                AIR

                    FLOW

                    DISK

HIGH SHEAR
RESISTANCE

FIG 1

TURBULENT FLOW

WALL

                    AIR FLOW

                    DISK

LOW TURBULENT        FIG 2
RESISTANCE

1.2

.380    .400

time (sec

3.9

4.6

10

10

FIG 3.

4

**European Patent Office**

# EUROPEAN SEARCH REPORT

Application Number

EP 94 30 8776

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | GB-A-2 051 458 (MEMOREX MINI DISC DRIVE CORP.) 4 January 1979 <br> * page 3, line 18 - line 28 * | 1,3 | G11B33/14 <br> G11B25/04 |
| A | EP-A-0 161 720 (DYSAN CORP & SEAGATE TECHNOLOGY) 21 November 1985 <br> * page 12, line 31 - page 13, line 27 * | 1 | |
| A | PATENT ABSTRACTS OF JAPAN <br> vol. 15, no. 382 (P-1257) 26 September 1991 <br> & JP-A-03 150 778 (TOSHIBA CORP) 27 June 1991 <br> * abstract * | | |
| D,A | IBM JOURNAL OF RESEARCH AND DEVELOPMENT., vol.18, no.6, November 1974, NEW YORK US <br> pages 480 - 488 <br> LENNEMANN 'Aerodynamic aspects of disk files' | | |
| A | IEEE TRANSACTIONS ON COMPONENTS,HYBRIDS,AND MANUFACTURING TECHNOLOGY, <br> vol.11, no.4, December 1988, NEW YORK US <br> pages 576 - 584, XP105724 <br> ABRAHAMSON, KOGA & EATON 'Flow visualization and spectral measurements in a simulated rigid disk drive' | | TECHNICAL FIELDS SEARCHED (Int.Cl.6) <br><br> G11B |
| A | I-THERM 88 (INTERSOCIETY CONF. ON THERMAL PHENOMENA IN THE FABRICATION AND OPERATION OF ELECTRONIC COMPONENTS, 11 May 1988, LOS ANGELES, CA, US <br> pages 162 - 170, XP11602 <br> TOROK & GRONSETH 'Flow and thermal fields in channels between corotaating disks' | | |

The present search report has been drawn up for all claims

| Place of search | Date of completion of the search | Examiner |
|---|---|---|
| THE HAGUE | 23 March 1995 | Devergranne, C |